# EUROPÄISCHE PATENTANMELDUNG

(11) **EP 2 546 599 A1**
(43) Veröffentlichungstag der Anmeldung: **16.01.2013**
(21) Anmeldenummer: 12174033.6
(22) Anmeldetag: 28.06.2012
(51) Int. Cl.: G01B 11/25, G01M 11/02, G01N 21/55

(54) **Deflektometrische Anordnung zur Oberflächeninspektion**

(30) Priorität: 12.07.2011 DE 102011051781
(71) Anmelder: Göpel electronic GmbH, 07745 Jena (DE)
(72) Erfinder: Schambach, Jörg, 07639 Bad Klosterlausnitz (DE); Türk, Andreas, 07745 Jena (DE); Hieronymus, Robert, 07747 Jena (DE)
(74) Vertreter: Schaller, Renate

(57) **Zusammenfassung**

Die Erfindung betrifft eine deflektometrische Anordnung mit einer in einem Hell-Dunkel-Muster leuchtenden ebenen Musterfläche 1, die eine ebene Oberfläche 3 eines von einer Aufnahme 5 gehaltenen Objektes schräg beleuchtet sowie einer Kamera 2 zur Abbildung eines Reflexbildes umfassend ein Objektiv 2.1. Das Objektiv 2.1 und der Matrixempfänger 2.2 sind so angeordnet sind, dass der Matrixempfänger 2.2 und damit die Bildebene BE in einer zur ebenen Oberfläche 3 konjugierten Ebene angeordnet ist, womit die Objektebene OE der Kamera 2 auf der Oberfläche 3 liegt.

## Beschreibung

Die Erfindung betrifft eine deflektometrische Anordnung zur Oberflächeninspektion wie sie gattungsgemäß aus der Patentanmeldung DE 103 45 586 A1 bekannt ist.

Eine häufige Aufgabe der Qualitätssicherung in verschiedensten Industriezweigen ist die Untersuchung von glänzenden ebenen Flächen und / oder Freiformflächen auf Oberflächenfehler. Dabei kann es sich bei den zu untersuchenden Flächen um Lackoberflächen, um technische Oberflächen, um Oberflächen von Gebrauchsgegenständen oder aber auch um Oberflächen von Karten zur Identifikation handeln.

Im Verlauf des Produktionsprozesses derartiger Erzeugnisse können eine ganze Reihe von Fehlern entstehen, die entweder die Funktionalität oder aber, was in zunehmenden Maße an Bedeutung gewinnt, den ästhetischen Gesamteindruck des Endproduktes negativ beeinflussen.

Es gibt verschiedene Ansätze, solche Oberflächen automatisch zu untersuchen.

Bei der sogenannten deflektometrischen Inspektion erfasst eine Bildaufnahmeeinrichtung (nachfolgend Kamera) - vorzugsweise eine CCD oder CMOS-Kamera - das Spiegelbild (Reflexbild) eines von einer zu untersuchenden Oberfläche reflektierten Hell-Dunkel-Musters.

Dieses Reflexbild zeigt aufgrund bestimmter Oberflächenfehler wie Kratzer, Beulen, Dellen, Schlagstellen, nicht lackierte Bereiche usw. Abweichungen von einem idealen Reflexbild des Hell-Dunkel-Musters.

Grundsätzlich wird bei der deflektometrischen Inspektion ein sich in der zu prüfenden Oberfläche spiegelndes Hell-Dunkel-Musters mehrfach aufgenommen. Dabei wird nach jeder Bildaufnahme das Hell-Dunkel-Muster um ein definiertes Maß relativ zur Oberfläche bewegt. In praktischen Anwendungen sind dabei mindestens 3 verschobene Hell-Dunkel-Muster aufzunehmen. Somit entsteht eine Sequenz von mindestens 3 Einzelbildern, in der das veränderte Reflexbild aufgenommen wurde. Durch die algorithmische Fusion der Einzelbilder gelingt es, in einem Ergebnisbild Oberflächenfehler kontrastreich darzustellen.

Bei bekannten Anordnungen zur deflektometrischen Inspektion (nachfolgend deflektometrische Anordnung) ist die Kamera so zur untersuchenden Oberfläche angeordnet, dass sie diese nicht senkrecht von oben, sondern unter einem Ausfallwinkel β < 90°erfasst.

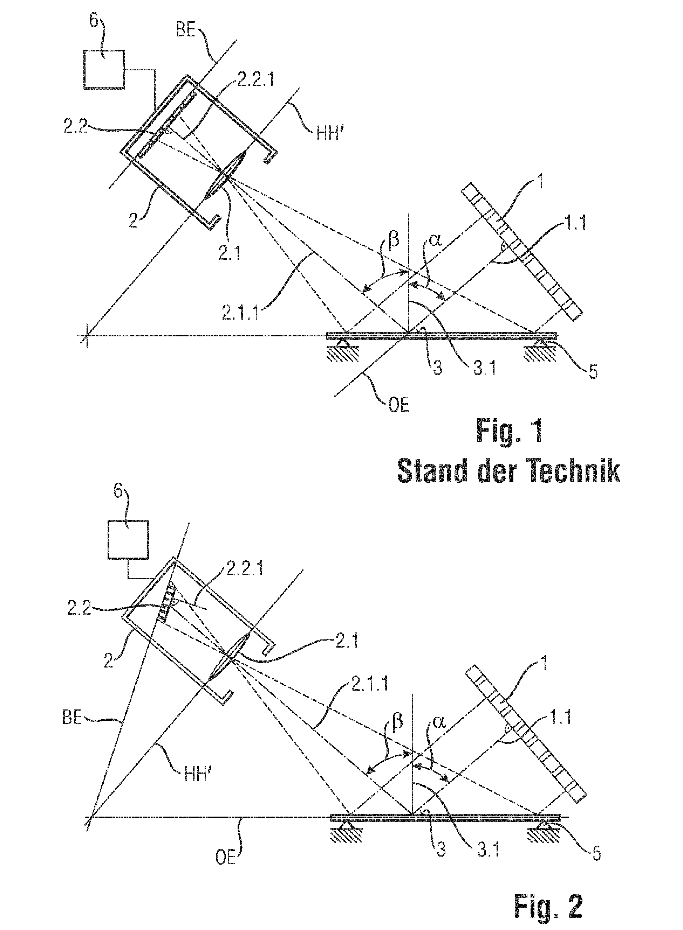

Dabei sind, wie in Fig. 1 gezeigt, eine primär oder sekundär strahlende Musterfläche 1 und eine Kamera 2, mit einem Objektiv 2.1 und einem Matrixempfänger 2.2 so zu der zu untersuchenden Oberfläche 3 ausgerichtet, dass die optische Achse 2.1.1 der Kamera 2 und eine Flächennormale der Musterfläche 1.1 im Auftreffpunkt der optischen Achse 2.1.1 auf der Oberfläche 3 einen Ausfallwinkel β gleich einem Einfallswinkel α miteinander einschließen. Damit wird das Hell-Dunkel-Muster in Richtung der optischen Achse 2.1.1 reflektiert. Durch den Matrixempfänger 2.2 wird ein Abbild der Oberfläche 3, überlagert von dem an der Oberfläche 3 reflektierten Hell-Dunkel-Muster, also einem Reflexbild, erfasst.

Eine derartige Anordnung ist in der Patentanmeldung DE 103 45 586 A1 in Form eines zweiten, weniger vorteilhaften Ausführungsbeispiels anhand der Fig.2 beschrieben.

Bei einer üblichen Kamera 2 ist der Matrixempfänger 2.2 und damit dessen Empfangsfläche in einer korrigierten Bildebene BE, senkrecht auf der optischen Achse 2.1.1 stehend, angeordnet. Die Flächennormale des Matrixempfängers 2.2.1 fällt mit der optischen Achse 2.1.1 zusammen.

Die Kamera 2 ist so auf die Oberfläche 3 eingestellt, dass die Objektebene OE der Kamera 2, die Oberfläche 3 schneidet, bevorzugt in der Mitte des von der Kamera 2 abgebildeten Inspektionsbereiches der Oberfläche 3. In Abhängigkeit von der Schärfentiefe, dass heißt der Ausdehnung des Bereiches um die Objektebene OE, aus dem eine scharfe Abbildung erfolgt, wird ein mittlerer Bereich des Inspektionsbereiches überlagert vom Reflexbild scharf abgebildet. Die angrenzenden Randbereiche werden zum Rand hin zunehmend unschärfer. Damit liefert die algorithmische Verrechnung der Einzelbilder in Abhängigkeit von der Abbildungsschärfe ein Ergebnisbild mit unterschiedlich kontrastiert abgebildeten Oberflächenfehlern.

Soll die Verrechnung der Bilder jeweils einer Sequenz zu direkt vergleichbaren Ergebnissen führen, so muss die Abbildung über den gesamten Inspektionsbereich mit einheitlicher Schärfe erfolgen.

Für eine ausreichend scharfe Abbildung über den gesamten Inspektionsbereich kann die Schärfentiefe, beispielsweise durch den Einsatz einer Blende mit einer kleinen Öffnung, entsprechend erhöht werden. Dies hat aber den Nachteil, dass die am Matrixempfänger zur Verfügung stehende Lichtmenge sinkt, so dass die Belichtungszeit und oder die Verstärkung der vom Matrixempfänger generierten Signale erhöht werden muss. Da von einer zu untersuchenden Oberfläche 3 eine Mindestanzahl von drei Bildern mit variierten Mustern aufgenommen wird, wirkt sich die Belichtungszeiterhöhung entsprechend ungünstig auf die Prüfzeiten aus. Die Erhöhung der Verstärkung bedingt ein höheres Rauschniveau, so dass die Empfindlichkeit für das Erkennen auch kleinster Defekte sinkt.

Der Effekt der Unschärfe der Abbildung lässt sich auch durch eine Verkleinerung des Inspektionsbereiches auf der Oberfläche 3 ausräumen, so dass der gesamte Inspektionsbereich innerhalb des Schärfentiefebereiches liegt.

Ein weiterer Nachteil der Anordnung einer üblichen Kamera, wie erläutert, besteht darin, dass das erfasste Reflexbild im Vergleich zu einem idealen Reflexbild des Hell-Dunkel-Musters verzerrt ist und somit zum einen in Größe und Form identische Oberflächenfehler im Inspektionsbereich keine in Größe und Form identische Veränderung des auf dem Matrixempfänger abgebildeten Reflexbildes bewirken und zum anderen die Veränderungen mit unterschiedlicher Auflösung erfassbar sind. Zwei insbesondere in der Ausdehnung identisch ausgeprägte Oberflächenfehler, die im erfassten Bild unterschiedlich groß dargestellt werden, wenn sie im Inspektionsbereich unterschiedlich weit entfernt von der Objektebene OE liegen, erschweren die Festlegung von Grenzwerten, ab denen ein Defekt zum Aussondern des Prüflings führen soll.

Die beschriebenen Effekte sind bei ebenen Flächen ausschließlich durch die beschriebene Anordnung von der Objektebene OE, der optischen Achse und der zu untersuchenden Oberfläche 3 zueinander begründet.

Bei gekrümmten Flächen werden diese Effekte verstärkt oder verringert, je nach Krümmungsradius, der sich bei einer Freiformfläche innerhalb des Inspektionsbereiches in jedem Punkt ändern kann.

Die erläuterten Nachteile einer der vorbenannten Anordnungen sind für eine Anordnung gemäß einem ersten, vorteilhaften Ausführungsbeispiel, wie in Fig. 1 der vorbenannten DE 103 45 586 A1 beschrieben, nicht gegeben.

Dies wird erreicht, indem die Flächennormale der der Oberfläche zugewandten Seite des Bilderzeugers (hier Flächennormale der Musterfläche) parallel zur Flächennormalen der Oberfläche ausgerichtet ist, die Flächennormalen also keinen Winkel miteinander einschließen.

Nachteilig an einer solchen Lösung ist insbesondere, dass aufgrund der Reflexion des erzeugten Bildes in sich selbst, der Bildaufnehmer innerhalb des Bilderzeugers angeordnet sein muss. Der Bilderzeuger weist zu diesem Zweck eine Öffnung auf innerhalb der der Bildaufnehmer zum Bilderzeuger ausgerichtet ist.

Das Abbild des Bildes auf der zu prüfenden Oberfläche ist damit über einen zu der Öffnung korrelierenden Bereich unvollständig, womit in diesem Bereich keine Oberflächenprüfung stattfindet.

Als primär strahlende Musterfläche 1 eignen sich besonders Thin-Film-Transistor-Bildschirme (TFT). TFT-Bildschirme nutzen Flüssigkristalle die das Licht einer hinter den Kristallen angeordneten Lichtquelle polarisieren. Je nach Polarisationsrichtung erscheint so ein TFT-Pixel hell oder dunkel. Da von einer zu untersuchenden Oberfläche eine Vielzahl von Bildern aufgenommen wird, muss der TFT-Bildschirm zur Verkürzung der Prüfzeit sehr schnell umgeschaltet werden. Nachteilig an Flüssigkristallen ist jedoch deren Trägheit, die bei sehr schnellem Umschalten zwischen hell und dunkel undefinierte Helligkeitsunterschiede in den projizierten Mustern entstehen lässt. Innerhalb der aufgenommenen Bildsequenzen führen Helligkeitsunterschiede zu Schwebungen im berechneten Ergebnisbild und verschlechtern die Erkennungsqualität von Oberflächenfehlern.

Der Erfindung liegt die Aufgabe zu Grunde, eine deflektometrische Anordnung zu schaffen, mit der ein Reflexbild über einen größeren Inspektionsbereich vollständig und scharf abgebildet werden kann.

Es ist auch Aufgabe der Erfindung, eine deflektometrische Anordnung zu schaffen, mit der ein Reflexbild ohne Verzerrungen abgebildet werden kann.

Eine weitere Aufgabe der Erfindung besteht in der Schaffung einer deflektometrischen Anordnung, die den Grauwertabgleich zwischen nacheinander aufgenommenen Bildern auf einfache Weise ermöglicht.

Die Aufgabe zur Schaffung einer deflektometrischen Anordnung, mit der ein Reflexbild über einen größeren Inspektionsbereich scharf abgebildet werden kann, wird für eine deflektometrische Anordnung mit einer in einem Hell-Dunkel-Muster leuchtenden ebenen Musterfläche 1, mit einer Flächennormale 1.1, die auf einen Auftreffpunkt einer zu untersuchenden reflektierenden, ebenen Oberfläche 3 eines von einer Aufnahme 5 gehaltenen Objektes gerichtet ist und in diesem Auftreffpunkt mit einer Flächennormalen der Oberfläche 3.1, einen Einfallswinkel α einschließt, sodass das Hell-Dunkel-Muster unter einem Ausfallwinkel β gleich dem Einfallswinkel α als Reflexbild reflektiert wird sowie einer Kamera 2 zur Abbildung des Reflexbildes umfassend ein Objektiv 2.1, mit einer Objektivebene HH' und einer optischen Achse 2.1.1 sowie einen ebenen Matrixempfänger 2.2, dessen Anordnung zum Objektiv 2.1 die Lage einer Bildebene BE des Objektives 2.1 definiert und der mit einem Rechner 6 in Verbindung steht, dadurch gelöst, dass das Objektiv 2.1 und damit die optische Achse 2.1.1 zur Oberfläche 3 und der Matrixempfänger 2.2 zum Objektiv 2.1 so angeordnet sind, dass der Matrixempfänger 2.2 und damit die Bildebene BE in einer zur ebenen Oberfläche 3 konjugierten Ebene angeordnet ist, womit die Objektebene OE der Kamera 2 auf der Oberfläche 3 liegt.

Vorteilhaft ist das Objektiv 2.1 so zur Oberfläche 3 angeordnet, dass die optische Achse 2.1.1, die den Ausfallwinkel β mit der Flächennormalen der Oberfläche 3.1 einschließt, auf die Oberfläche 3 gerichtet ist und sich die Objektebene OE und die Bildebene BE in einem Punkt mit der Objektivebene HH' schneiden. Mit dieser Anordnung wird das Reflexbild vollständig scharf abgebildet.

Aufgabe der Erfindung, eine deflektometrische Anordnung zu schaffen, mit der ein Reflexbild scharf und ohne ohne Verzerrungen abgebildet werden kann, wird für eine deflektometrische Anordnung nach Anspruch 1, dadurch gelöst, dass das Objektiv 2.1 so zur Oberfläche 3 angeordnet ist, dass die optische Achse 2.1.1, senkrecht auf der Oberfläche 3 steht und die Objektivebene HH' parallel zur Oberfläche 3 verläuft und der Matrixempfänger 2.2 ebenfalls parallel zur Oberfläche 3 angeordnet ist, sodass auch die Bildebene BE parallel zur Oberfläche 3 verläuft, wodurch das Reflexbild vollständig scharf und ohne Verzerrung abgebildet werden kann.

Es ist von Vorteil, wenn die Musterfläche 1 von einem TFT-Bildschirm gebildet wird und in einer von der Oberfläche 3 aufgespannten Ebene neben der Oberfläche 3 ein ebener Testspiegel 4 angeordnet ist, sodass dieser gleichfalls ein Reflexbild vom Hell-Dunkel-Muster erzeugt aus dem Grauwerte der hellen und dunklen Bereiche des Musters bestimmt werden können, um nachträglich einen Grauwertabgleich zwischen von dem Matrixempfänger 2.2 aufgenommenen Einzelbildern vornehmen zu können.

Anhand der Zeichnungen soll die Anordnung im Folgenden beispielhaft näher erläutert werden.

Es zeigen:
- Fig. 1: Prinzipskizze einer Anordnung gemäß dem Stand der Technik
- Fig. 2: Prinzipskizze einer ersten Ausführung einer erfindungsgemäßen Anordnung
- Fig. 3: Prinzipskizze einer zweite Ausführung einer erfindungsgemäßen Anordnung
- Fig. 4: Prinzipskizze einer dritten Ausführung einer erfindungsgemäßen Anordnung.

Die in **Fig.1** als Prinzipskizze dargestellte Anordnung zeigt den prinzipiellen Aufbau einer aus dem Stand der Technik bekannten deflektometrischen Anordnung, wie sie in der Beschreibung des Standes der Technik ausführlich erläutert wurde.

Bei gekrümmten zu untersuchenden Oberflächen entsteht bei Verwendung einer Kamera, mit einer üblicherweise eben korrigierten Bildebene, unabhängig wie die Anordnung ausgeführt ist, unvermeidbar eine partielle Unschärfe der Bilder, wenn die maximale Abweichung von Punkten der Oberfläche innerhalb des Inspektionsbereichs über die Schärfentiefe hinausgeht. Ebenso wird bei der Untersuchung von gekrümmten Oberflächen mit derartigen Kameras unvermeidbar die Abbildung von Reflexbildern verzerrt. Die Wirkung dieser Effekte auf die Abbildung muss hingenommen und soweit als möglich rechentechnisch beseitigt bzw. vermindert werden, indem die Auswertealgorithmen darauf angepasst werden.

Für die Untersuchung von ebenen Flächen lässt sich der Rechenaufwand mit einer erfindungsgemäßen Anordnung erheblich reduzieren da scharfe bzw. scharfe und unverzerrte Einzelbilder erzeugt werden und das errechnete Gesamtbild Oberflächenfehler mit gleichem Kontrast über das gesamte Bild zeigt.

Damit werden die Abbildungsfehler, unabhängig wo sie sich im Inspektionsbereich befinden, unmittelbar vergleichbar.

**Fig. 2** zeigt eine erste Ausführungsform einer Anordnung.

Die Anordnung umfasst gleich dem Stand der Technik eine Musterfläche 1, eine Aufnahme 5 mit der ein Objekt mit einer zu untersuchenden Oberfläche 3 in einer vorbestimmten Lage gehalten werden kann und eine Kamera 2 mit einem Objektiv 2.1, eine Objektivebene HH' und eine optische Achse 2.1.1 aufweisend, und einem Matrixempfänger 2.2 mit einer Flächennormalen 2.2.1 der mit einem Rechner 6 in Verbindung steht.

Die Musterfläche 1 ist eine ebene Fläche mit einer Flächennormalen 1.1, die in einem Hell-Dunkel-Muster strahlt. Die Musterfläche 1 kann ein Sekundärstrahler sein, z. B. ein durch ein Kollimator beleuchteter Schirm mit abwechselnd transparenten und nicht-transparenten Streifen. Vorteilhaft ist die Musterfläche 1 ein Primärstrahler und wird durch einen TFT-Bildschirm gebildet.

Die Musterfläche 1 ist zu einer zu untersuchenden ebenen, reflektierenden Oberfläche 3, die in einer Aufnahme 5 definiert gehalten wird, so angeordnet, dass die Flächennormale der Musterfläche 1.1 mit einer Flächennormalen der Oberfläche 3.1 einen Einfallswinkel α einschließt.

Das Reflexbild des an der Oberfläche 3 reflektierten Hell-Dunkel-Musters wird in eine Richtung reflektiert, die mit der Flächennormalen der Oberfläche 3.1 einen Ausfallwinkel β, der gleich groß ist wie der Einfallswinkel α, reflektiert.

Gemäß der ersten Ausführungsform der Anordnung ist das Objektiv 2.1 so zur Oberfläche 3 ausgerichtet, dass die optische Achse 2.1.1 mit der Flächennormalen der Oberfläche 3 den Ausfallwinkel β einschließt. Damit die Oberfläche 3 in einer Objektebene des Objektivs 2.1 liegt, muss der Matrixempfänger 2.2 in einer hierzu konjugierten Ebene liegen. Für den Fall, dass die Objektebene OE nicht senkrecht zur optischen Achse 2.1.1 verläuft, ergibt sich zwischen der Objektivebene HH' und der Objektebene OE ein Schnittpunkt in Abhängigkeit vom Winkel den die Objektivebene HH' und die Objektebene OE miteinander einschließen sowie dem Abbildungsmaßstab des Objektivs. Die zur Objektebene OE gehörende Bildebene BE schneidet die Objektivebene HH' in eben diesem Schnittpunkt. In dieser Bildebene BE ist der Matrixempfänger 2.2 angeordnet.

Mit dieser Anordnung wird das Reflexbild zwar scharf aber verzerrt abgebildet.

Die erläuterte Anordnung von Objektebene OE, Bildebene BE und Objektivebene HH' ist als Scheimpflug-Anordnung aus der Architekturfotografie bekannt.

Die Entzerrung kann rechentechnisch vor oder nach der algorithmischen Fusion der Einzelbilder erfolgen. Dazu werden die Einzelbilder kalibriert. Dies ist möglich indem anstelle des Objektes mit der zu untersuchenden Oberfläche 3 ein ebener Spiegel mit einer ideal glänzenden Oberfläche angeordnet wird und mit der Musterfläche 1 ein Kalibriermuster, dass eine definierte geometrische Struktur aufweist, generiert wird. Ein Reflexbild des Kalibriermusters ist dann ausschließlich von dem Kalibriermuster bestimmt und wird auf dem Matrixempfänger 2.2 abgebildet. Mit Hilfe von entsprechenden Auswertealgorithmen können Kalibrierdaten gewonnen werden, die dann auf die Bilder angewendet werden.

Praktisch wird man für eine Anordnung vorteilhaft eine Kamera 2 verwenden, in der das Objektiv 2.1 und damit die Objektivebene HH' und der Matrixempfänger 2.2 in einem geeigneten Winkel und einem geeigneten Abstand zueinander dauerhaft fest angeordnet sind, sodass ein Objekt mit einer zu untersuchenden Oberfläche 3 in einer günstigen Entfernung durch die Aufnahme 5 gehalten werden kann. Da es für das Wesen der Erfindung ohne Bedeutung ist, soll der Einfachheit halber davon ausgegangen werden, dass die objektseitige und die bildseitige Hauptebene H und H' des Objektivs 2.1 zusammenfallen und die Objektivebene HH' bilden.

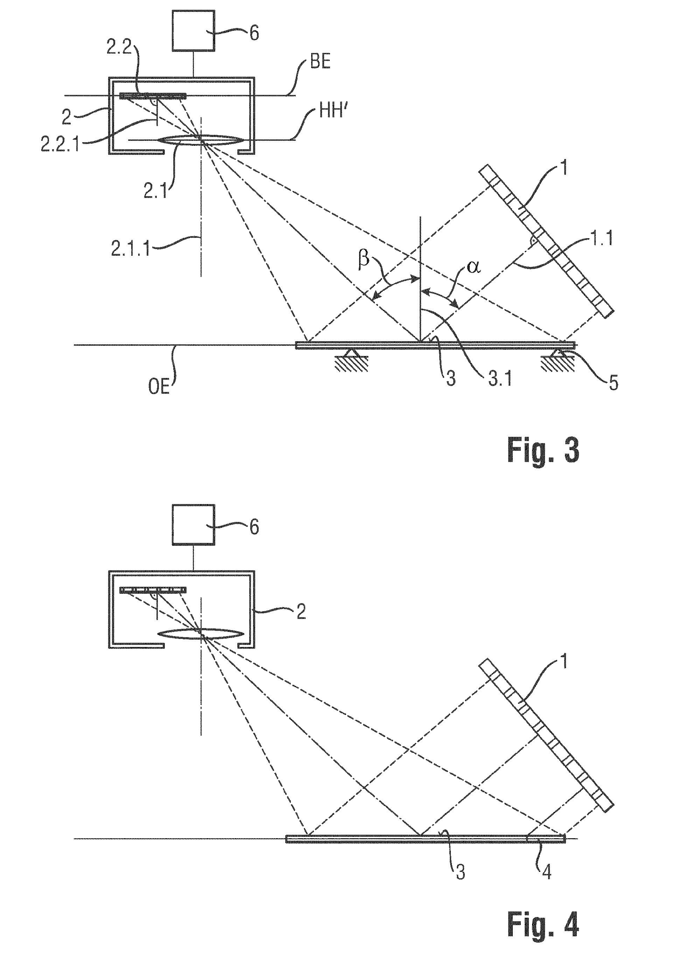

Eine zweite Ausführung der Anordnung ist in **Fig. 3** dargestellt.

Im Unterschied zur ersten Ausführung ist die Kamera 2 so zur Oberfläche 3 angeordnet, dass die optische Achse 2.1.1 senkrecht zur Oberfläche 3 verläuft.

Damit die Oberfläche 3 in der Objektebene OE der Kamera 2 liegt, ist der Matrixempfänger 2.2, der in der Bildebene BE des Objektivs 2.1 angeordnet sein muss, wie üblich ebenfalls in einer senkrechten Ebene zur optischen Achse 2.1.1 angeordnet. Im Unterschied zu einer üblichen Kamera, wie sie als Stand der Technik beschrieben wurde, trifft die optische Achse 2.1.1 jedoch nicht mittig auf die Empfängermatrix, sondern diese ist so innerhalb der Bildebene BE so weit zur optischen Achse 2.1.1 versetzt, dass das Reflexbild vollständig auf dem Matrixempfänger 2.2 abgebildet wird.

Der Versatz lässt sich in Kenntnis der Brennweiten, der objektseitigen Schnittweite und dem Ausfallwinkel β in bekannter Weise errechnen.

Diese zweite Ausführung der Anordnung ermöglicht eine scharfe und verzerrungsfreie Abbildung des Reflexbildes.

Auch die Anordnung von Objektebene OE, Bildebene BE und Objektivebene HH' gemäß der zweiten Ausführung ist als Scheimpflug-Anordnung aus der Architekturfotografie bekannt. Insbesondere hohe Gebäude können, diffus mit Tageslicht beleuchtet, scharf und geometrisch unverfälscht abgebildet werden.

Eine dritte Ausführung der Anordnung ist in **Fig.4** dargestellt.

Diese unterscheidet sich zur zweiten Ausführung dadurch, dass von der Aufnahme 5 neben dem Objekt mit der zu untersuchenden reflektierenden Oberfläche 3 ein ebener Testspiegel 4 gehalten wird und zwar so, dass sich dessen Spiegelfläche in der gleichen Ebene befindet wie die Oberfläche 3. Dieser spiegelt ebenso wie die Oberfläche 3 ein Reflexbild in die Kamera 2 auf dem Matrixempfänger 2.2. Nach der Bildaufnahme wird der Grauwert der hellen und dunklen Bereiche des vom Testspiegel 4 kommenden Reflexbildes bestimmt. Anhand dieser bekannten Helligkeiten kann ein Grauwertabgleich zwischen den einzelnen Bildern einer Sequenz erfolgen. Damit können Schwebungen im Ergebnisbild verhindert werden.

### Bezugszeichenliste

- 1: Musterfläche
- 1.1: Flächennormale der Musterfläche 1
- 2.: Kamera
- 2.1: Objektiv
- 2.1.1: optische Achse
- 2.2: Matrixempfänger
- 2.2.1.: Flächennormale des Matrixempfängers 2.2
- 3.: zu untersuchende reflektierende Oberfläche
- 3.1.: Flächennormale der Oberfläche 3
- 4: ebener Testspiegel
- 5: Aufnahme
- 6: Rechner

- α: Einfallswinkel
- β: Ausfallwinkel
- BE: Bildebene
- OE: Objektebene
- HH': Objektivebene

## Patentansprüche

1. Deflektometrische Anordnung mit einer in einem Hell-Dunkel-Muster leuchtenden ebenen Musterfläche (1), mit einer Flächennormale (1.1), die auf einen Auftreffpunkt einer zu untersuchenden reflektierenden, ebenen Oberfläche (3) eines von einer Aufnahme (5) gehaltenen Objektes gerichtet ist und in diesem Auftreffpunkt mit einer Flächennormalen der Oberfläche (3.1), einen Einfallswinkel (α), ungleich Null, einschließt, sodass das Hell-Dunkelmuster unter einem Ausfallswinkel (β) gleich dem Einfallswinkel (α) als Reflexbild reflektiert wird sowie einer Kamera (2) zur Abbildung des Reflexbildes umfassend ein Objektiv (2.1), mit einer Objektivebene (HH') und einer optischen Achse (2.1.1) sowie einen ebenen Matrixempfänger (2.2), dessen Anordnung zum Objektiv (2.1) die Lage einer Bildebene (BE) des Objektivs (2.1) definiert und der mit einem Rechner (6) in Verbindung steht, **dadurch gekennzeichnet,**
**dass** das Objektiv (2.1) und damit die optische Achse (2.1.1) zur Oberfläche (3) und der Matrixempfänger (2.2) zum Objektiv (2.1) so angeordnet sind, dass der Matrixempfänger (2.2) und damit die Bildebene (BE) in einer zur ebenen Oberfläche (3) konjugierten Ebene angeordnet ist, womit die Objektebene (OE) der Kamera (2) auf der Oberfläche (3) liegt.

2. Deflektometrische Anordnung nach Anspruch 1,**dadurch gekennzeichnet,**
**dass** das Objektiv (2.1) so zur Oberfläche (3) angeordnet ist, dass die optische Achse (2.1.1), den Ausfallwinkel (β) mit der Flächennormalen der Oberfläche (3.1) einschließend, auf die Oberfläche (3) gerichtet ist und sich die Objektebene (OE) und die Bildebene (BE) in einem Punkt mit der Objektivebene (HH') schneiden, wodurch das Reflexbild vollständig scharf abgebildet werden kann.

3. Deflektometrische Anordnung nach Anspruch 1, **dadurch gekennzeichnet,**
**dass** das Objektiv (2.1) so zur Oberfläche (3) angeordnet ist, dass die optische Achse (2.1.1), senkrecht auf der Oberfläche (3) steht und die Objektivebene (HH') parallel zur Oberfläche (3) verläuft und der Matrixempfänger (2.2) ebenfalls parallel zur Oberfläche (3) angeordnet ist, sodass auch die Bildebene (BE) parallel zur Oberfläche (3) verläuft, wodurch das Reflexbild vollständig scharf und ohne Verzerrung abgebildet werden kann.

4. Deflektometrische Anordnung nach Anspruch 3, **dadurch gekennzeichnet,**
**dass** die Musterfläche (1) von einem TFT-Bildschirm gebildet wird und in einer von der Oberfläche (3) aufgespannten Ebene neben der Oberfläche 3) ein ebener Testspiegel (4) angeordnet ist, sodass dieser gleichfalls ein Reflexbild vom Hell-Dunkel-Muster erzeugt aus dem Grauwerte der hellen und dunklen Bereiche des Musters bestimmt werden können, um nachträglich einen Grauwertabgleich zwischen von dem Matrixempfänger (2.2) aufgenommenen Einzelbildern vornehmen zu können.
